# EUROPEAN PATENT SPECIFICATION

(11) **EP 1 184 770 B1**
(45) Date of publication and mention of the grant of the patent: **14.11.2007**
(21) Application number: 00500193.8
(22) Date of filing: 30.08.2000
(51) Int. Cl.: G05G 1/14

(54) **Support for automotive vehicle pedals**
Halterung für Kraftfahrzeugpedal
Support pour la pédale d'un véhicule automobile

(43) Date of publication of application: 06.03.2002
(73) Proprietor: Autotech Engineering, A.I.E., 48220 Abadino (Vizcaya) (ES)
(72) Inventor: Alapont Echaniz, Inaki, 48220 Abadino (Vizcaya) (ES); Costas Vila, Juan, 48220 Abdino (Vizcaya) (ES)
(74) Representative: Carpintero Lopez, Francisco

(56) References cited:
- EP-A- 0 720 080
- GB-A- 2 235 026
- US-A- 4 427 318

## Description

### OBJECT OF THE INVENTION

The present invention relates to a support for automobile vehicle pedals, specifically to a lightweight version which includes means integrated in the support providing a quick assembly of the support on the vehicle floor.

The object of the invention is to provide automobile manufacturers with a lightweight support on which to mount the brake and clutch pedals, with such support provided with means which simplify its assembly onto the vehicle floor, in the form of bosses which fit in orifices provided for them.

### BACKGROUND OF THE INVENTION

Brake and clutch pedals in automobiles are mounted on a common support, about which they are free to swivel independently when acted upon by the driver's foot, when intending to either brake or engage / disengage the clutch in order to change gears.

Said supports are generally made in their typical embodiments from steel plate. The need to withstand and transmit the loads applied by the driver means that these supports must have a substantial stiffness, requiring the use of thick plates with the resulting drawback of their weight.

Additionally, the support on which these pedals are mounted is provided with a plate of a suitable configuration, through which the set is attached to the vehicle floor, by means of dowels which are inserted in orifices for this effect made in the vehicle floor, so that screws are made to pass through these dowels with which the support is attached permanently and rigidly.

Use of these dowels implies a high economic cost and results in increased weight of said supports, as they are made by cold distortion or screw-cutting of solid elements, which are not needed by the present invention. In addition, an improved assembly capacity of the pedal set is achieved.

GB-2235026-A describes an assembled module of brake booster and pedal for use in a motor vehicle. It comprises support means integral with a wall of the brake booster and a brake pedal mounted on the support means.

### DESCRIPTION OF THE INVENTION

The invention is defined in claim 1. Further features of the invention are disclosed in the dependent claims.

The support which is disclosed is conceived to solve the aforementioned situation with a simple and effective solution. More specifically, an embodiment of the support of the invention incorporates flaps which emerge from an opening provided for the brake bellows in the anchoring plate, and which are obtained by ripping without breaking of the material, which by folding create one or two sectors which make up one or two flaps approximately perpendicular to the support, attached by suitable means to the lateral supports of the brake pedal, providing a high stiffness and allowing to reduce the thickness of the plate used to make said lateral supports; and bosses preferably made from formed plates, by which the support is positioned and mounted on the vehicle floor, by inserting these bosses in the respective orifices or housings provided for this purpose in the floor. Thus, use of the conventional dowels is avoided, achieving a simpler and faster assembly, reduced weight and economic benefits.

Naturally, these bosses may be incorporated on the support in several manners, such as attached by welding or riveting on the support orifices, or mounted on or forming part of a frame which is later attached to an opening made for such purpose in the support.

In this second case, the boss frame is provided with teeth which act as anchoring clips for the frame to the support opening, for which the teeth lock in flanges provided in corresponding points of the edge of the opening, which opening is provided for the brake bellows to pass and which may be obtained by ripping without breaking of the material, and where folding of this ripped material forms two sectors which make up flaps perpendicular to the support, providing reinforcement means for the latter.

Additionally, and also as an option, the bosses may be complemented by transverse walls which lock onto the lower edge of the bosses, for which the latter are provided with positioning grooves on the parts which make up the clips, with said walls acting as guides for inserting the anchoring screws.

### DESCRIPTION OF THE DRAWINGS

Further characteristics of the present invention will become apparent in view of the accompanying drawings of a preferred embodiment of the invention, where for purposes of illustration and in a non-limiting manner the following is shown:

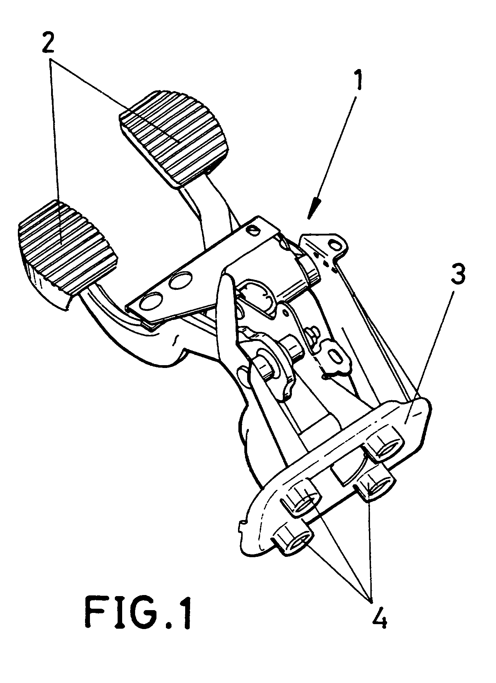

Figure 1.- Shows a bottom perspective view of the automobile pedal support set object of the invention.

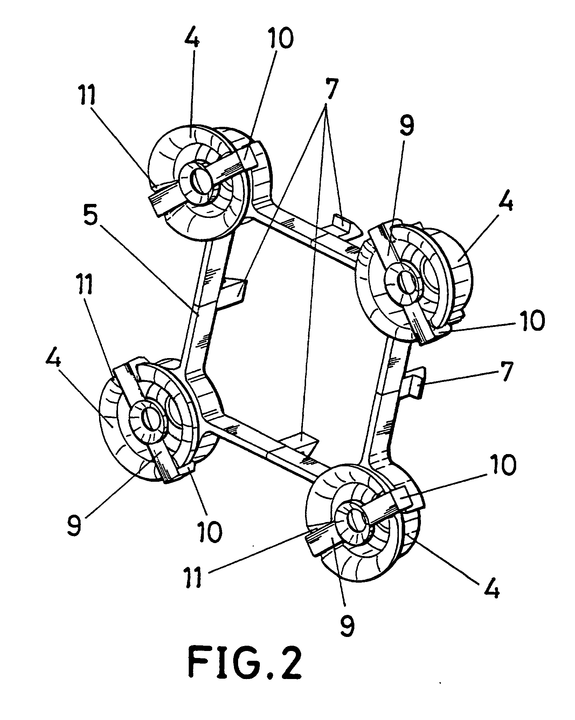

Figure 2.- Shows a perspective view of the bosses incorporated on a frame which is later mounted and attached to the support.

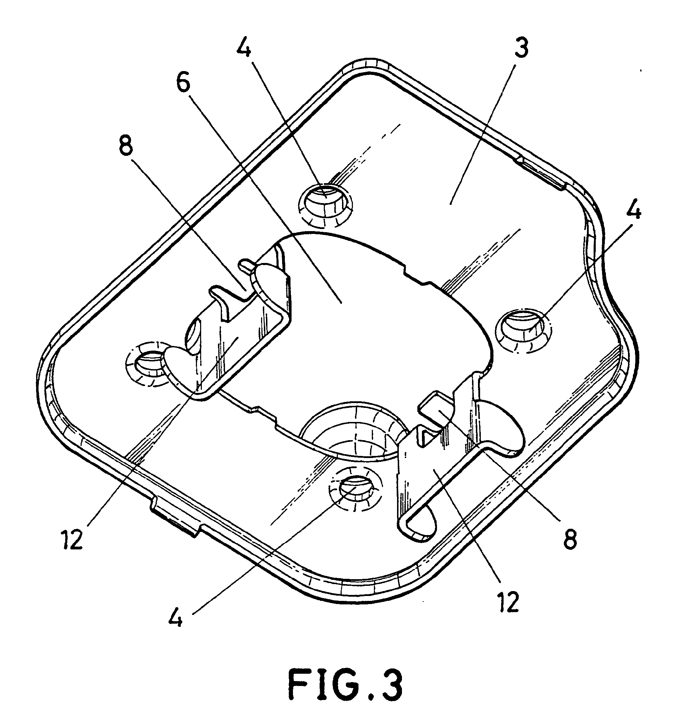

Figure 3.- Shows a bottom perspective view of the plate which forms part of the pedal support, with the corresponding assembly bosses, showing the central opening and its corresponding material folded perpendicular to the plane of the window.

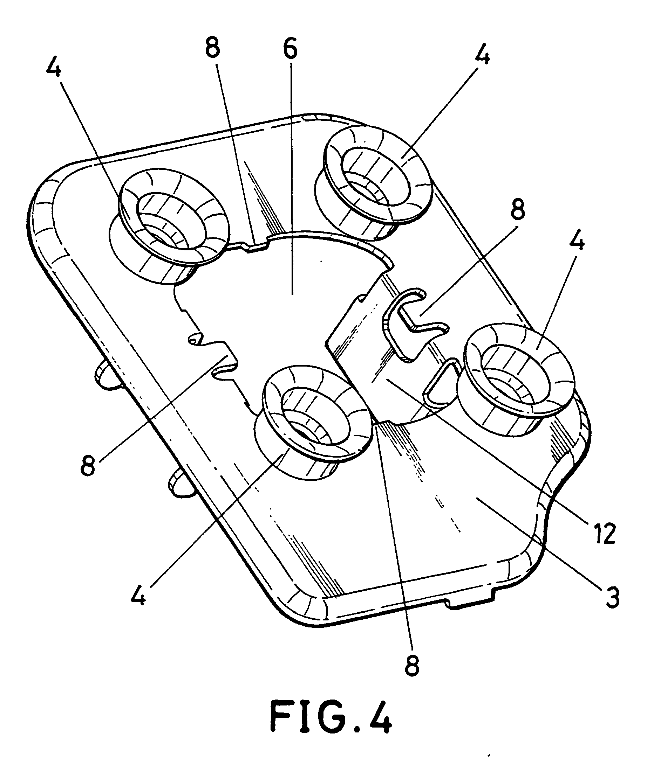

Figure 4.- Shows, finally, a perspective of the same set as the previous figure seen from the opposite side.

### PREFERRED EMBODIMENT OF THE INVENTION

As may be seen in the figures support (1), in which the brake and clutch pedals (2) are mounted so that they may swivel, is provided with a plate (3) by which it is attached to the vehicle floor.

Plate (3) of support (1) incorporates bosses (4) by which the set is attached to the vehicle floor, with bosses (4) inserting in orifices made for this purpose in said floor. After this simple and quick assembly the final anchoring is achieved by screws which pass through bosses (4) and enter the plate of the vehicle floor itself.

Bosses (3) may be riveted or welded to plate (2) of support (1), although as an option they may form part of a frame (5) which is mounted and anchored to central opening (6) which for said purpose is provided in plate (3) of support (1) to allow the brake bellow to pass.

In this case frame (5) is provided with teeth (7) in the form of clips, which insert in flanges (8) made for this purpose in the internal edge of central opening (6).

Also as an option, transverse walls (9) may be mounted on bosses (4) which act as guides in inserting the anchoring screws, with walls (9) retained by clips (10) inserted in grooves (11) made for this purpose in the perimeter of bosses (4).

Finally, central opening (6) made for the clutch bellows, on which frame (5) may be mounted with bosses (4) in the version where the bosses are incorporated in support (1), may be obtained by tearing of material without breaking, forming two sectors or flaps (12) which fold orthogonally outwards, that is, towards the side where pedals (2) are located, said flaps (12) forming reinforcements for the entire support (1).

## Claims

1. Support (1) for automobile vehicle pedals, provided with means for a swivelling mount of the brake and clutch pedals (2) of a vehicle, as well as with a plate (3) which forms part of support (1), through which the latter is attached to the vehicle floor by means of screws, **characterised in that** said plate (3) of support (1) comprises bosses (4) for positioning and mounting of said support (1) on the vehicle floor, by inserting said bosses (4) in orifices made for this purpose in the vehicle floor, with the anchoring screws passing through said bosses (4), and at least one flap (12) which emerges from plate (3) of support (1), said at least one flap (12) being obtained by ripping and folding outwards the material of the plate (3).

2. - Support for automobile vehicle pedals, as claimed in claim 1, **characterised in that** said bosses (4) are attached to plate (3) of support (1) by riveting or welding.

3. - Support for automobile vehicle pedals, as claimed in claim 1, **characterised in that** said bosses (4) are mounted on a frame (5), inserted in central opening (6) provided in the plate (3) of the support (1) to allow the brake bellows to pass.

4. - Support for automobile vehicle pedals, as claimed in claim 3, **characterised in that** the frame (5) is provided with teeth (7) by which said frame (5) is attached to the central opening (6), as said teeth (7) insert in flanges (8) provided in the internal perimeter of the central opening (6).

5. - Support for automobile vehicle pedals, as claimed in earlier claims, **characterised in that** the bosses (4) may incorporate as an option transverse walls (9) which act as guides through bosses (4) of the anchoring screws to the vehicle floor.

6. - Support for automobile vehicle pedals, as claimed in claim 5, **characterised in that** the outer ends of transverse walls (9) are provided with clips (10) which lock in grooves (11) made for such purposes in the perimetral edge of bosses (4).

7. Support (1) for automobile vehicle pedals, as claimed in any of the earlier claims, **characterised in that** said plate (3) has two flaps (12) folded outwards, which emerge from a central opening (6) of said plate (3), the two flaps (12) acting as reinforcement of support (1) and consisting of the ripped material from said opening (6).

## Patentansprüche

1. Halterung (1) für Kraftfahrzeugpedale, die mit Einrichtungen für eine schwenkbare Befestigung der Brems- und Kupplungspedale (2) eines Fahrzeugs, ebenso wie mit einer Platte (3), die einen Teil einer Halterung (1) bildet, mit der letztere an dem Fahrzeugboden mittels Schrauben befestigt ist, versehen ist, **dadurch gekennzeichnet, dass** die Platte (3) der Halterung (1) Ansätze (4), um die Halterung (1) an dem Fahrzeugboden zu positionieren und zu befestigen, aufweist, indem die Ansätze (4) in Öffnungen eingesetzt werden, die für diesen Zweck in dem Fahrzeugboden gebildet sind, wobei die Verankerungsschrauben durch die Ansätze (4) hindurchführen, und mindestens eine Lasche (12) aufweist, die von der Platte (3) der Halterung (1) ausgeht, wobei die mindestens eine Lasche (12) durch Herauslösen des Materials der Platte (3) und Falten nach außen erhalten ist.

2. Halterung für Kraftfahrzeugpedale nach Anspruch 1, **dadurch gekennzeichnet, dass** die Ansätze (4) an der Platte (3) der Halterung (1) durch Vernieten oder Verschweißen befestigt sind.

3. Halterung für Kraftfahrzeugpedale nach Anspruch 1, **dadurch gekennzeichnet, dass** die Ansätze (4) an einem Rahmen (5) befestigt sind, der in einer zentralen Öffnung (6) eingesetzt ist, die in der Platte (3) der Halterung (1) vorgesehen ist, um zu ermöglichen, dass Bremsbälge hindurchführen.

4. Halterung für Kraftfahrzeugpedale nach Anspruch 3, **dadurch gekennzeichnet, dass** der Rahmen (5) mit Zähnen (7) versehen ist, mit denen der Rahmen (5) an der zentralen Öffnung (6) befestigt ist, wenn sich die Zähne (7) in die Flansche (8), die in dem Innenumfang der zentralen Öffnung (6) vorgesehen sind, einsetzen.

5. Halterung für Kraftfahrzeugpedale nach einem vorhergehenden Anspruch, **dadurch gekennzeichnet, dass** die Ansätze (4) als Option Querwände (9) umfassen können, die als Führungen durch die Ansätze (4) der Verankerungsschrauben an dem Fahrzeugboden wirken.

6. Halterung für Kraftfahrzeugpedale nach Anspruch 5, **dadurch gekennzeichnet, dass** die äußeren Enden der Querwände (9) mit Klammern (10) versehen sind, die sich in Nuten (11) verriegeln, die für solche Zwecke in der Umfangskante der Ansätze (4) gebildet sind.

7. Halterung (1) für Kraftfahrzeugpedale nach einem der vorhergehenden Ansprüche, **dadurch gekennzeichnet, dass** die Platte (3) zwei Laschen (12), die nach außen gefaltet sind, besitzt, die von einer zentralen Öffnung (6) der Platte (3) ausgehen, wobei die zwei Laschen (12) als Verstärkung der Halterung (1) wirken und aus von der Öffnung (6) heraus getrenntem Material bestehen.

## Revendications

1. Support (1) pour pédales de véhicules automobiles, muni de moyens pour un montage pivotant des pédales de frein et d'embrayage (2) d'un véhicule, ainsi que d'une plaque (3) qui forme une partie du support (1), à travers laquelle ce dernier est fixé au plancher du véhicule au moyen de vis, **caractérisé en ce que** ladite plaque (3) du support (1) comprend des bossages (4) destinés au positionnement et au montage dudit support (1) sur le plancher du véhicule, en insérant lesdits bossages (4) dans des orifices prévus à cette fin dans le plancher du véhicule, les vis d'ancrage traversant lesdits bossages (4), et au moins une patte (12) qui fait saillie à partir de la plaque (3) du support (1), ladite au moins une patte (12) étant obtenue en arrachant et en pliant vers l'extérieur le matériau de la plaque (3).

2. Support pour pédales de véhicules automobiles selon la revendication 1, **caractérisé en ce que** lesdits bossages (4) sont fixés à la plaque (3) du support (1) par rivetage ou par soudure.

3. Support pour pédales de véhicules automobiles selon la revendication 1, **caractérisé en ce que** lesdits bossages (4) sont montés sur un cadre (5) inséré dans une ouverture centrale (6) prévue dans la plaque (3) du support (1) pour permettre au soufflet de frein de passer.

4. Support pour pédales de véhicules automobiles selon la revendication 3, **caractérisé en ce que** le cadre (5) est muni de dents (7) au moyen desquelles ledit cadre (5) est fixé à l'ouverture centrale (6), et lesdites dents (7) s'insèrent dans des brides (8) prévues dans le périmètre interne de l'ouverture centrale (6).

5. Support pour pédales de véhicules automobiles, selon les revendications précédentes, **caractérisé en ce que** les bossages (4) peuvent optionnellement intégrer des parois transversales (9) qui agissent comme des guides à travers les bossages (4) des vis d'ancrage vers le plancher du véhicule.

6. Support pour pédales de véhicules automobiles selon la revendication 5, **caractérisé en ce que** les extrémités externes des parois transversales (9) sont munies d'étriers (10) qui s'emboîtent dans des rainures (11) prévues à cet effet dans le rebord périphérique des bossages (4).

7. Support (1) pour pédales de véhicules automobiles selon l'une quelconque des revendications précédentes, **caractérisé en ce que** ladite plaque (3) présente deux pattes (12) pliées vers l'extérieur, qui font saillie depuis une ouverture centrale (6) de ladite plaque (3), les deux pattes (12) agissant comme un renforcement du support (1) et consistant en le matériau arraché de ladite ouverture (6).
